# EUROPÄISCHE PATENTSCHRIFT

(11) **EP 1 848 626 B1**
(45) Veröffentlichungstag und Bekanntmachung des Hinweises auf die Patenterteilung: **19.04.2017**
(21) Anmeldenummer: 05707497.3
(22) Anmeldetag: 18.02.2005
(51) Int. Cl.: B62D 15/02, G01S 1/70

(54) **VORRICHTUNG ZUM VERBRINGEN EINES KRAFTFAHRZEUGS IN EINE ZIELPOSITION**
DEVICE FOR BRINGING A MOTOR VEHICLE TO A TARGET POSITION
DISPOSITIF PERMETTANT D'AMENER UN VEHICULE EN UN EMPLACEMENT CIBLE

(43) Veröffentlichungstag der Anmeldung: 31.10.2007
(73) Patentinhaber: Bayerische Motoren Werke Aktiengesellschaft, 80809 München (DE)
(72) Erfinder: EHMANNS, Dirk, 81379 München (DE); GENSLER, Frank, 85579 Neubiberg (DE)
(86) Internationale Anmeldenummer: PCT/EP2005/001682
(87) Internationale Veröffentlichungsnummer: WO 2006/087002

(56) Entgegenhaltungen:
- DE-A1-102004 007 850
- FR-A- 2 554 612

## Beschreibung

Die vorliegende Erfindung betrifft eine Vorrichtung zum automatischen Verbringen eines Kraftfahrzeuges in eine Zielposition, aufweisend eine Sensorvorrichtung und eine Auswertungseinheit zur Bestimmung der Position des Kraftfahrzeugs relativ zur Zielposition sowie Mittel zur Planung einer kollisionsfreien Fahrt von der aktuellen Position zur Zielposition und Mittel zur Ausführung der geplanten Fahrt.

Aus der EP 1 249 379 A2 ist ein Verfahren zum Verbringen eines Kraftfahrzeuges in eine Zielposition bekannt, bei welchem das Kraftfahrzeug in eine Startposition nahe der angestrebten Zielposition gebracht wird, nach einer ersten fahrerseitigen Aktivierung die Umgebung des Kraftfahrzeuges zumindest zur Detektion der Zielposition fortlaufend abgetastet und die aktuelle Fahrzeugposition fortlaufend ermittelt wird, anhand der ermittelten Umgebungs- und Positionsinformationen Steuerinformationen für das Verbringen des Kraftfahrzeuges in die Zielposition ermittelt werden, nach einer zweiten fahrerseitigen Aktivierung von den Steuerinformationen abhängige Steuerbefehle an den Antriebsstrang und/oder die Bremsanlage und/oder die Lenkung des Kraftfahrzeuges abgegeben werden, wodurch das Kraftfahrzeug fahrerunabhängig in die Zielposition fährt.

Ausgelöst wird ein solches Verfahren typischerweise durch eine oder mehrere Bedienaktionen eines außerhalb des Kraftfahrzeugs befindlichen Bedieners.

Das aus der EP 1 249 379 A2 bekannte Verfahren eignet sich zum Verbringen eines Kraftfahrzeuges in vielerlei Zielpositionen, z. B. gewöhnliche Parklücken. Diese anspruchsvolle Aufgabenstellung impliziert, dass das Verfahren auch in unstrukturierten, d. h. nur natürliche Landmarken aufweisenden, Umgebungen anwendbar sein soll. Hierzu ist ein sehr hoher technischer Aufwand seitens des Kraftfahrzeugs zur Erfassung der Umgebung des Kraftfahrzeugs und der eigenen Position erforderlich.

Das Dokument DE 10 2004 007850 A1 offenbart ein Verfahren zur automatischen Haltestellenanfahrt und/oder Haltestellenausfahrt mit einem Fahrzeug, wobei mit Hilfe einer Lageerkennungseinrichtung die aktuelle Relativposition des Fahrzeugs in Bezug auf die Haltestelle ermittelt und in Abhängigkeit der Relativposition des Fahrzeugs zur Haltestelle die Fahrzeug-Sollgrößen zum Erreichen der Haltestelle bestimmt werden und Stelleinheiten im Fahrzeug in der Weise betätigt werden, dass die zugeordneten Fahrzeug-Istgrößen den Fahrzeug-Sollgrößen folgen. Die Haltestelle wird dabei anhand charakteristischer Merkmale identifiziert und der Haltestelle zugeordnete, in einer Datenbank hinterlegte Referenzdaten werden bei der Ermittlung der Fahrzeug-Sollgrößen berücksichtigt.

Das Dokument FR-A-2 554 612 offenbart ein Verfahren zur Führung eines mit Kameras ausgestatteten Fahrzeugs. Dabei sind in einem Fahrbereich des Fahrzeugs Leuchtmarkierungen vorgesehen, die polarisiertes Licht linear aussenden. An Bord des Fahrzeugs wird jedes Bild gesondert durch zwei verschiedene lineare Polarisationsfilter aufgenommen, die erhaltenen Bilder verglichen und ein Signalsatz für die Positionen der Leuchtmarkierungen bestimmt. In einer Lernphase wird das Fahrzeug auf einem Bezugsweg fortbewegt und die erhaltene Folge von Leuchtmarkierungspositionssignalen wird aufgezeichnet. In einer Phase mit automatischer Steuerung wird das Fahrzeug dann in solcher Richtung bewegt, dass die Abweichung zwischen dem jeweiligen Augenblickssignalsatz und dem aufgezeichnetem Bezugssignalsatz vermindert wird.

Aufgabe der vorliegenden Erfindung ist es, eine Vorrichtung zu schaffen welche automatische Ein- und/oder Ausparkvorgänge ermöglicht und mit geringem technischem Aufwand seitens des Kraftfahrzeugs auskommt.

Gelöst wird diese Aufgabe erfindungsgemäß durch eine Vorrichtung zum automatischen Verbringen eines Kraftfahrzeuges in eine Zielposition, aufweisend eine Sensorvorrichtung und eine Auswertungseinheit zur Bestimmung der Position des Kraftfahrzeugs relativ zur Zielposition sowie Mittel zur Planung einer kollisionsfreien Fahrt von der aktuellen Position zur Zielposition und Mittel zur Ausführung der geplanten Fahrt, bei welcher ein erster Teil der Sensorvorrichtung am oder im Kraftfahrzeug angeordnet ist und ein zweiter Teil der Sensorvorrichtung ortsfest in einer definierten Position nahe der Zielposition angeordnet ist.

Kraftfahrzeuge werden typischerweise wiederholt an einer von sehr wenigen Zielpositionen ein- oder ausgeparkt. Häufig wiederholen sich insbesondere Parkvorgänge bei einer einzigen Zielposition, beispielsweise der heimischen Garage des Fahrzeughalters. Diese Zielposition bzw. zumindest ein ortsfest nahe der Zielposition befindlicher Gegenstand, beispielsweise die Wand einer Garage, wird erfindungsgemäß durch die ortsfeste Anordnung des zweiten Teils der Sensorvorrichtung in definierter Position so für Parkvorgänge vorbereitet, dass der kraftfahrzeugseitige technische Aufwand, welcher für die Ermöglichung eines Verfahrens zum automatischen Verbringen eines Kraftfahrzeuges in eine Zielposition erforderlich ist, erheblich reduziert werden kann. Durch die Vorbereitung der Zielposition bzw. des zumindest einen ortsfest nahe der Zielposition befindlichen Gegenstands wird eine strukturierte Umgebung für den automatisch durchzuführenden Parkvorgang geschaffen.

Ein erster Vorteil einer erfindungsgemäßen Vorrichtung besteht darin, dass der kraftfahrzeugseitige technische Aufwand insofern gegenüber einem Verfahren gemäß dem Stand der Technik reduziert wird als der gerätetechnische Aufwand seitens des Kraftfahrzeugs reduziert wird. Dieser Vorteil kann sowohl die seitens des Kraftfahrzeugs vorzusehende Sensorik als auch die Rechenleistung einer seitens des Kraftfahrzeugs vorzusehenden Recheneinheit betreffen.

Ein zweiter Vorteil einer erfindungsgemäßen Vorrichtung besteht darin, dass der zur Durchführung eines Verfahrens zum automatischen Verbringen eines Kraftfahrzeuges in eine Zielposition erforderliche Rechenaufwand reduziert wird und/oder die Genauigkeit und/oder Robustheit eines solchen Verfahrens gesteigert werden kann.

Gemäß einer Weiterbildung der Erfindung ist durch die in einer erfindungsgemäßen Vorrichtung enthaltene Sensorvorrichtung zumindest ein horizontaler Winkel zwischen einer Bezugsachse des ersten oder zweiten Teils der Sensorvorrichtung und einer Verbindungsachse zwischen einem Bezugspunkt des ersten Teils und einem Bezugspunkt des zweiten Teils der Sensorvorrichtung bestimmbar.

Hierin unterscheidet sich eine erfindungsgemäße Vorrichtung deutlich von bekannten Einparkhilfen für Garagenstellplätze, bei welchen zumindest ein Teil einer Sensorvorrichtung, z. B. zur Ultraschall-Abstandsmessung, ortsfest nahe einer Zielposition angeordnet ist. Solche Vorrichtungen erfassen in der Regel nur den Abstand eines Kraftfahrzeugs von der Zielposition und somit nur einen geringen Teil der zur Durchführung automatischer Ein- und/oder Ausparkvorgänge erforderlichen Messgrößen. Zudem sind solche Vorrichtungen entgegen einer erfindungsgemäßen Vorrichtung typischerweise ausschließlich zur Unterstützung des Fahrers, beispielsweise durch akustische oder visuelle Information, bei Parkvorgängen vorgesehen, bei welchen das Kraftfahrzeug vom Fahrer bedient wird.

Gemäß einer ersten bevorzugten Ausgestaltung der Erfindung ist der erste Teil der Sensorvorrichtung in einer definierten räumlichen Lage bezüglich des Kraftfahrzeugs angeordnet und die Sensorvorrichtung und die Auswertungseinheit sind geeignet, den horizontalen Winkel zwischen einer Bezugsachse des ersten Teils der Sensorvorrichtung, insbesondere der Fahrzeuglängsachse, und einer Verbindungsachse zwischen einem Bezugspunkt des ersten Teils und einem Bezugspunkt des zweiten Teils der Sensorvorrichtung zu bestimmen.

Der zwischen der Bezugsachse des ersten Teils der Sensorvorrichtung und besagter Verbindungsachse aufgespannte Winkel gibt bei entsprechender Definition der Achsen und Bezugspunkte und entsprechender Auswertung Aufschluss darüber, in welcher Richtung sich die Zielposition bezüglich des Kraftfahrzeugs befindet.

Gemäß einer zweiten bevorzugten Ausgestaltung der Erfindung ist der zweite Teil der Sensorvorrichtung in einer definierten räumlichen Lage bezüglich der Zielposition angeordnet und die Sensorvorrichtung und die Auswertungseinheit sind geeignet, den horizontalen Winkel zwischen einer Bezugsachse des zweiten Teils der Sensorvorrichtung, insbesondere einer Garagenmittelachse, und einer Verbindungsachse zwischen einem Bezugspunkt des ersten Teils der Sensorvorrichtung und einem Bezugspunkt des zweiten Teils zu bestimmen.

Der zwischen der Bezugsachse des zweiten Teils der Sensorvorrichtung und besagter Verbindungsachse aufgespannte Winkel gibt bei entsprechender Definition der Achsen und Bezugspunkte und entsprechender Auswertung Aufschluss darüber, in welcher Richtung sich das Kraftfahrzeug bezüglich der Zielposition befindet.

Gemäß einer dritten bevorzugten Ausgestaltung der Erfindung sind die Sensorvorrichtung und die Auswertungseinheit geeignet, den Abstand zwischen einem Bezugspunkt des ersten Teils und einem Bezugspunkt des zweiten Teils der Sensorvorrichtung zu bestimmen.

Bei entsprechender Definition der Bezugspunkte und entsprechender Auswertung ist hieraus der Abstand zwischen der aktuellen Kraftfahrzeugposition und der Zielposition ableitbar.

Der zweite Teil der Sensorvorrichtung umfasst zumindest eine so genannte künstliche Landmarke. Künstliche Landmarken werden in der Industrie üblicherweise eingesetzt, um die Einsatzumgebung autonomer mobiler Systeme, z. B. fahrerloser Transportsysteme (FTS) in der Fertigung, gezielt zu präparieren. Ihr Einsatz im Zusammenhang mit Kraftfahrzeugen ist bisher wenig verbreitet. Künstliche Landmarken werden typischerweise in definierter räumlicher Position und/oder Lage angebracht und sind so beschaffen, dass die Sensorik eines autonomen mobilen Systems diese einfach und robust erkennen kann. Künstliche Landmarken können mit Sensorik unterschiedlicher Wirkprinzipien, z. B. optisch und/oder akustisch und/oder induktiv und/oder magnetisch, korrespondieren. Sie können jeweils aktiv oder passiv ausgeführt sein.

Unter Verwendung mehrerer Landmarken kann beispielsweise durch Triangulation in an sich bekannter Weise die Position und Lage des ersten Teils der Sensorvorrichtung bezüglich des zweiten Teils, d. h. die Position und Lage des Kraftfahrzeugs bezüglich der Zielposition bestimmt werden. Solche Bestimmungsverfahren sind basierend auf verschiedenen Messprinzipien, z. B. optisch und/oder akustisch und/oder induktiv und/oder magnetisch, bekannt.

Gemäß einer besonders bevorzugten Ausführungsform der vorliegenden Erfindung wird eine strukturierte Umgebung für den automatisch durchzuführenden Parkvorgang geschaffen, indem genau eine künstliche Landmarke ortsfest nahe der Zielposition angebracht wird.

Um die einfache und robuste Bestimmung möglichst vieler der weiter oben genannten Größen zu erlauben, muss die künstliche Landmarke bestimmte Bedingungen erfüllen. Gemäß der vorliegenden Erfindung wird eine passive optische künstliche Landmarke verwendet, welche derart beschaffen ist, dass sie zur richtungsabhängigen Reflexion einfallenden Lichts geeignet ist.

Vorliegend ist die passive optische künstliche Landmarke derart beschaffen und/oder derart räumlich angeordnet, dass sie zur horizontal variablen Reflexion einfallenden Lichts geeignet ist. Hierzu sind beispielsweise Reflektoren auf Lamellenbasis, insbesondere mit Lamellen von variablem Anstellwinkel geeignet. Alternativ ist der Einsatz zumindest eines so genannten lentikularen Bildes, umgangssprachlich auch als Wackelbild bezeichnet, als passive optische künstliche Landmarke mit horizontal variablen Reflexionseigenschaften oder als Teil einer solchen denkbar.

Insbesondere der letzte Erkennungsschritt ist sehr stark von der Beschaffenheit der gewählten Landmarke abhängig. Gemäß einer vorteilhaften Ausführungsform der vorliegenden Erfindung ist die Landmarke so beschaffen, dass sich durch ihr richtungsabhängiges Reflexionsverhalten ein Helligkeitsverlauf innerhalb der Abbildung der Landmarke ergibt, welcher vom Betrachtungswinkel abhängt. Bei horizontal variablem Reflexionsverhalten der Landmarke hängt ein solcher Helligkeitsverlauf insbesondere vom horizontalen Betrachtungswinkel ab. Gemäß einer bevorzugten Ausführungsform der vorliegenden Erfindung ist die Landmarke so beschaffen, dass sich bei entsprechenden Beleuchtungsverhältnissen innerhalb der Abbildung der Landmarke im aufgenommenen Kamerabild zumindest ein gut detektierbarer und im Wesentlichen die Form eines vertikal verlaufenden Balkens aufweisender Bereich ergibt, welcher eine von der Helligkeit der umgebenden Bereiche unterschiedliche Helligkeit besitzt. Die laterale Position eines solchen vertikalen Balkens innerhalb der Abbildung der Landmarke im aufgenommenen Kamerabild steht bei entsprechender Ausführungsform der Landmarke in eindeutigem Zusammenhang mit dem gesuchten Winkel. Gemäß besonders bevorzugter Ausführungsformen der vorliegenden Erfindung ist die Landmarke so beschaffen, dass sich genau ein solcher Balken mit gegenüber den umgebenden Bereichen erhöhter Helligkeit und/oder genau ein solcher Balken mit gegenüber den umgebenden Bereichen verringerter Helligkeit ergibt.

Um Beleuchtungsverhältnisse zu schaffen, welche eine robuste und genaue Arbeitsweise einer erfindungsgemäßen Vorrichtung unterstützen, umfasst die Sensorvorrichtung einer erfindungsgemäßen Vorrichtung bevorzugt eine eigene Lichtquelle und/oder ist geeignet, zumindest einen Fahrzeugscheinwerfer zu aktivieren.

In einer erfindungsgemäßen Vorrichtung können die Sensorvorrichtung und die Auswertungseinheit als einzige Mittel zur Bestimmung der Position und/oder Lage des Kraftfahrzeugs relativ zur Zielposition vorgesehen sein oder es können weitere, ggf. zusätzlich zur Umsetzung weiterer Funktionalitäten vorgesehene, Sensorvorrichtungen in einer erfindungsgemäßen Vorrichtung enthalten sein.

Die Nutzung der zumindest einen in einer erfindungsgemäßen Vorrichtung enthaltenen Sensorvorrichtung bzw. der weiteren Sensorvorrichtungen kann jeweils die Planung einer kollisionsfreien Fahrt von der aktuellen Position zur Zielposition und/oder deren Überwachung auf Kollisionsfreiheit und/oder eine erneute Planung während der Ausführung einer Fahrt und/oder die Auslösung eines automatischen Abbruchs einer solchen Fahrt oder einer Rückmeldung an den, typischerweise außerhalb des Kraftfahrzeugs befindlichen, Bediener betreffen. Eventuell werden mehrere enthaltene Sensorvorrichtungen für unterschiedliche der genannten Aufgaben genutzt bzw. bestimmte enthaltene Sensorvorrichtungen werden nur für einzelne der genannten Aufgaben genutzt. Insbesondere können die Signale mindestens einer weiteren Sensorvorrichtung zur Überprüfung von Sicherheitskriterien verwendet werden. Alternativ oder zusätzlich können in einer erfindungsgemäßen Vorrichtung Informationen weiterer Sensorvorrichtungen im Sinne einer Sensorfusion oder einer Plausibilitätsprüfung auswertbar sein.

Gemäß einer Weiterbildung der vorliegenden Erfindung sind bei der Planung einer kollisionsfreien Fahrt Parameter nutzbar, welche die Position und Lage des zweiten Teils der Sensorvorrichtung bezüglich der Zielposition charakterisieren und/oder welche die räumlichen Verhältnisse rund um die Zielposition charakterisieren.

Gemäß einer anderen Weiterbildung der vorliegenden Erfindung weist die Sensorvorrichtung einer erfindungsgemäßen Vorrichtung mindestens zwei zweite Teile auf, welche jeweils einer Zielposition zugeordnet und nahe dieser Zielposition angebracht sind.

Insbesondere können die mindestens zwei zweiten Teile der Sensorvorrichtung so ausgeführt sein, dass sie durch den ersten Teil der Sensorvorrichtung unterscheidbar sind. Auf diese Weise sind unterschiedliche Zielpositionen unterscheidbar und Parkvorgänge für unterschiedliche Zielpositionen in unterschiedlicher Weise plan- und ausführbar. Entsprechend können mehrere Sätze von Parametern in einer erfindungsgemäßen Vorrichtung abgelegt sein, welche jeweils die Position und Lage eines zweiten Teils der Sensorvorrichtung bezüglich einer zugehörigen Zielposition und/oder die räumlichen Verhältnisse rund um eine zugehörige Zielposition charakterisieren.

Anhand der beigefügten Zeichnungen wird eine bevorzugte Ausführungsform der Erfindung im Folgenden weiter erläutert. Dabei zeigen jeweils schematisch
- Fig. 1: die von einer erfindungsgemäßen Vorrichtung bestimmbaren geometrischen Größen und die räumlichen Verhältnisse zwischen einem autonom in eine Zielposition, hier eine mittlere Parkposition innerhalb eines Garagenstellplatzes, zu verbringenden Kraftfahrzeug und der Zielposition,
- Fig. 2: die Reflexionseigenschaften einer gemäß einer bevorzugten Ausführungsform der Erfindung verwendeten passiven optischen künstlichen Landmarke,
- Fig. 3: das optische Erscheinungsbild einer gemäß einer bevorzugten Ausführungsform der Erfindung verwendeten passiven optischen künstlichen Landmarke für unterschiedliche Betrachtungswinkel bei identischen Lichtverhältnissen und
- Fig. 4: das optische Erscheinungsbild einer alternativen Ausführungsform einer passiven optischen künstlichen Landmarke für unterschiedliche Betrachtungswinkel bei identischen Lichtverhältnissen.

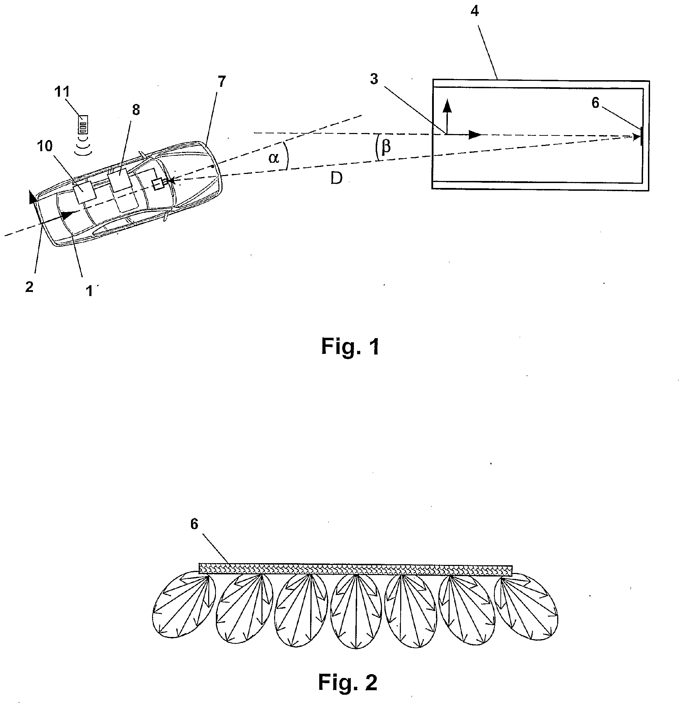

Ein Kraftfahrzeug 1 soll von einer Startposition 2 autonom in eine Zielposition 3, hier eine mittlere Parkposition innerhalb eines Garagenstellplatzes 4, verbracht werden. Fig. 1 zeigt schematisch die anfangs, d. h. mit in Startposition 2 befindlichem Kraftfahrzeug 1, vorliegenden räumlichen Verhältnisse.

Der autonome Parkvorgang wird unterstützt durch eine Sensorvorrichtung. Die Sensorvorrichtung umfasst als ersten Teil eine am Kraftfahrzeug 1 in definierter Position und Lage angebrachte Kamera 5 und eine an der Wand des Garagenstellplatzes 4 in definierter Position und Lage angebrachte passive optische künstliche Landmarke 6.

Die Kamera 5 ist so ausgerichtet, dass die Kameraachse parallel zur Fahrzeuglängsachse verläuft.

Die passive optische künstliche Landmarke 6 besteht in einem 3D-Reflektor mit richtungsabhängigem Reflexionsverhalten, besitzt eine flache rechteckige Form und ist horizontal mittig und rechtwinklig zur Garagenmittelachse angebracht.

Die Landmarke 6 ist in solcher räumlicher Lage an der Wand des Garagenstellplatzes 4 angebracht, dass sie ein horizontal variables Reflexionsverhalten besitzt.

In Fig. 2 sind die Reflexionseigenschaften der Landmarke 6 dargestellt. Fig. 2 zeigt eine Draufsicht auf die Landmarke 6 und verschiedene horizontal gleichverteilte Bündel von Reflexionspfeilen, welche jeweils das auf einen horizontalen Abschnitt der Landmarke 6 zutreffende Reflexionsverhalten visualisieren. Die Länge jedes Reflexionspfeils entspricht dem Reflexionsgrad in der Richtung des jeweiligen Reflexionspfeils. Eine Landmarke gemäß Fig. 2 besitzt somit ein vom horizontalen Betrachtungswinkel abhängiges optisches Erscheinungsbild.

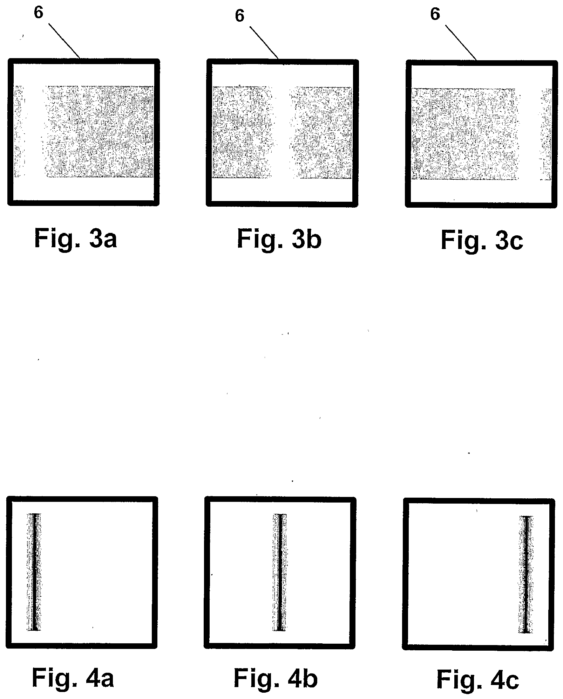

Fig. 3 zeigt das optische Erscheinungsbild einer solchen Landmarke für unterschiedliche Betrachtungswinkel bei identischen Lichtverhältnissen, hier bei im Wesentlichen gleichmäßigem Lichteinfall. Fig. 3a zeigt das optische Erscheinungsbild der Landmarke bei Sicht von links. Fig. 3b zeigt das optische Erscheinungsbild der Landmarke bei mittiger Sicht. Fig. 3c zeigt das optische Erscheinungsbild der Landmarke bei Sicht von rechts. Je nach Betrachtungswinkel befindet sich an unterschiedlicher horizontaler Position innerhalb der Abbildung der Landmarke im Kamerabild ein im Wesentlichen die Form eines vertikal verlaufenden Balkens besitzender Bereich mit gegenüber den umliegenden Bereichen erhöhter Helligkeit.

Fig. 4 zeigt das optische Erscheinungsbild einer alternativen Ausführungsform einer solchen Landmarke für unterschiedliche Betrachtungswinkel bei identischen Lichtverhältnissen, hier bei im wesentlichen gleichmäßigem Lichteinfall. Fig. 4a zeigt das optische Erscheinungsbild der alternativen Ausführungsform einer Landmarke bei Sicht von links. Fig. 4b zeigt das optische Erscheinungsbild der Landmarke alternativen Ausführungsform einer Landmarke bei mittiger Sicht. Fig. 4c zeigt das optische Erscheinungsbild der alternativen Ausführungsform einer Landmarke bei Sicht von rechts. Je nach Betrachtungswinkel befindet sich an unterschiedlicher horizontaler Position innerhalb der Abbildung der Landmarke im Kamerabild ein im Wesentlichen die Form eines vertikal verlaufenden Balkens besitzender Bereich mit gegenüber den umliegenden Bereichen verringerter Helligkeit.

Vertikal ist die Landmarke 6 an dem Garagenstellplatz 4 auf in etwa mittlerer Höhe zwischen der Höhe der Anbringung der Kamera 5 am Kraftfahrzeug und der Höhe der Fernlicht-Scheinwerfer 7 des Kraftfahrzeugs angebracht. Dort besteht bei eingeschalteten Fernlicht-Scheinwerfern 7 ein im wesentlichen gleichmäßiger Lichteinfall auf die Landmarke 6.

Das Kraftfahrzeug besitzt eine Steuereinheit 10 zur Planung bzw. zur Steuerung der Planung automatischer Parkvorgänge und zur Steuerung der Ausführung dieser automatischen Parkvorgänge. Durch eine Fernbedienung 11, welche mit der Steuereinheit 10 kommuniziert, ist ein automatischer Parkvorgang durch einen Bediener auslösbar bzw. steuerbar.

Die Fernlicht-Scheinwerfer 7 des Kraftfahrzeugs 1 sind durch die Steuereinheit 10 aktivierbar und werden während der Planung und Ausführung eines Parkvorgangs zu Gunsten einer exakten und robusten Funktion der bildverarbeitungsbasierten Sensorik aktiviert.

Die Kamera 5 nimmt Bilder in ausreichendem horizontalem Kamera-Öffnungswinkel auf. Die von der Kamera 5 aufgenommenen Kamerabilder werden von einer Auswertungseinheit 8 ausgewertet. Die Auswertungseinheit 8 kann vollständig oder teilweise identisch mit der Steuereinheit 10 sein. Beide können zusätzlich für andere Funktionalitäten des Kraftfahrzeugs nutzbar sein.

Zur Planung eines automatischen Parkvorgangs detektiert die Auswertungseinheit 8 im Kamerabild zunächst das Vorhandensein der Landmarke 6 anhand der in etwa rechteckigen Formgestalt ihrer Abbildung. Um diese Detektion unabhängig von Verzerrungen der Abbildung im Kamerabild robust durchführen zu können, muss das Kraftfahrzeug in etwa frontal vor dem Garagenstellplatz 4 stehen. Ansonsten können als Abhilfe oder zur Robustifizierung des Erkennungsverfahrens zusätzlich weitere Eigenschaften der Landmarke bzw. ihrer Abbildung im Kamerabild (z. B. Farbe, Helligkeit) berücksichtigt werden. Zumindest muss eine Sichtverbindung zwischen Kamera und Landmarke bestehen. Aus Sicherheitsgründen wird zu einem späteren Zeitpunkt eine Plausibilitätsprüfung durchgeführt.

Nach der Detektion der Landmarke 6 werden anhand der Kamerabilder der Kamera 5 die folgenden Bestimmungen geometrischer Größen durchgeführt:
- Der Abstand D zwischen einem Bezugspunkt, hier dem Linsenmittelpunkt, der Kamera 5 und einem Bezugspunkt, hier dem Flächenmittelpunkt, der Landmarke 6 wird aus dem Verkleinerungsfaktor der Abbildung der Landmarke 6 im aufgenommenen Kamerabild bestimmt.
- Der horizontale Winkel α zwischen der Kameraachse und der Verbindungsachse zwischen dem Linsenmittelpunkt der Kamera 5 und dem Flächenmittelpunkt der Landmarke 6 wird anhand der Schwerpunktslage der Abbildung der Landmarke 6 im aufgenommenen Kamerabild bestimmt.
- Der horizontale Winkel β zwischen der Garagenmittelachse und der Verbindungsachse zwischen dem Linsenmittelpunkt der Kamera 5 und dem Flächenmittelpunkt der Landmarke 6 wird anhand von Merkmalen, insbesondere Helligkeitsmerkmalen, der Abbildung der Landmarke 6 im aufgenommenen Kamerabild bestimmt. Dabei wird der Helligkeitsverlauf innerhalb der Abbildung der Landmarke 6 im Kamerabild ausgewertet. Der Lichtschein der Fernlicht-Scheinwerfer 7 verursacht im Kamerabild einen gut detektierbaren vertikal verlaufenden Balken hoher Helligkeit innerhalb der Abbildung der Landmarke 6. Die laterale Position des vertikalen Balkens hoher Helligkeit innerhalb der Abbildung der Landmarke 6 lässt sich in an sich bekannter Weise durch den Einsatz eines Bildverarbeitungsverfahrens durch die Auswertungseinheit 8 bestimmen. Aus der lateralen Position wiederum wird der gesuchte Winkel β bestimmt, dessen Wert mit der lateralen Position des vertikalen Balkens in eindeutigem Zusammenhang steht.

Zur Sicherstellung der korrekten Detektion der genannten geometrischen Größen wird anschließend von der Auswertungseinheit eine Plausibilitätsprüfung bezüglich der Verzerrung der rechteckigen Formgestalt der Landmarke und zumindest einer der bestimmten geometrischen Größen durchgeführt.

Anhand der bestimmten Größen ist, beispielsweise durch die Auswertungseinheit 8, die räumliche Position und Lage des Kraftfahrzeugs 1 relativ zur Zielposition 3 eindeutig bestimmbar. In Abhängigkeit von dieser Relativposition und -lage kann durch die Steuereinheit 10 in an sich bekannter Weise eine kollisionsfreie Fahrt von der aktuellen Position zur Zielposition 3 geplant werden. Bei der Planung der kollisionsfreien Fahrt nutzt die Steuereinheit 10 dort abgelegte Parameter, welche die räumlichen Verhältnisse rund um die Zielposition 3, insbesondere die Abmessungen des Garagenstellplatzes 4, und/oder die Position und Lage der Landmarke bezüglich der Zielposition 3 charakterisieren.

Durch Mittel zur Ausführung der geplanten Fahrt kann diese Fahrt in an sich bekannter Weise ausgeführt werden. Die Mittel zur Ausführung der geplanten Fahrt werden dabei von der Steuereinheit 10 gesteuert, welche gemäß dem vorliegenden Ausführungsbeispiel durch die folgenden Eingriffe auf das Kraftfahrzeug 1 einwirkt:
- Motorstart und -stop
- Gangwahl
- Lenkungseingriff hydraulisch oder durch Elektromotor
- Bremseingriff
- Türverriegelung und -entriegelung
- Umfeldüberwachung zur Kollisionsvermeidung durch ultraschallbasierte Park-Distance-Control-Sensoren
- Aktivierung der Fernlicht-Scheinwerfer 7
- Aktivierung der Warnblinkleuchten des Kraftfahrzeugs 1 zur Warnung im Umfeld befindlicher Verkehrsteilnehmer und/oder Passanten

Der autonom in der beschriebenen Art und Weise ablaufende Parkvorgang ist durch einen außerhalb des Kraftfahrzeugs 1 befindlichen Bediener durch die Fernbedienung 11 auslösbar bzw. steuerbar. Die Fernbedienung 11 kann gleichzeitig zur Ver- und Entriegelung des Kraftfahrzeugs 1 vorgesehen sein. Typischerweise löst eine erste Bedienaktion des Bedieners die Selbstlokalisation des Kraftfahrzeugs 1 bezüglich der Zielposition 3 und die Planung einer kollisionsfreien Fahrt aus. Eine zweite Bedienaktion löst die Ausführung der Fahrt aus. Insbesondere kann die erste Bedienaktion des Bedieners in einer einfachen oder wiederholten Verriegelungsaktion bestehen. Die zweite Bedienaktion besteht typischerweise in einem dauerhaften Tastendruck an der Fernbedienung 11. Ein Abbruch des dauerhaften Tastendrucks führt typischerweise zu einem umgehenden Abbruch der Ausführung der geplanten Fahrt. Der Bediener kann die Fahrt somit bei Sicherheitsbedenken, bei versehentlicher Betätigung der Fernbedienung 11 oder bei kurzfristig veränderten Absichten bezüglich der weiteren Nutzung des Kraftfahrzeugs 1 verzögerungsfrei abbrechen.

Gemäß einer alternativen Ausführungsform der Erfindung werden von der Kamera 5 aufgenommene Kamerabilder laufend auf das Vorhandensein der Landmarke 6 oder einer vergleichbaren Landmarke durchsucht und die erfindungsgemäße Vorrichtung, insbesondere die Steuereinheit 10, führt selbsttätig die Planung einer kollisionsfreien Fahrt für einen automatischen Parkvorgang aus, sobald eine solche Landmarke detektiert wird. Die erste Bedienaktion des Bedieners kann somit entfallen.

Während der Ausführung einer geplanten Fahrt werden der Abstand D, sowie die beiden Winkel α und β gegebenenfalls wiederholt in der beschriebenen Art und Weise bestimmt. Die aktuelle Position und Lage des Kraftfahrzeugs 1 kann somit mit der gemäß der geplanten Fahrt erwarteten Position und Lage abgeglichen werden. Unerwartete Abweichungen führen zum Abbruch der geplanten Fahrt durch die Steuereinheit 10.

Ebenso zum Abbruch der Ausführung einer geplanten Fahrt durch die Steuereinheit 10 führt die Detektion unerwarteter Hindernisse durch die Umfeldüberwachung des Kraftfahrzeugs 1.

Gemäß einer bevorzugten Ausführungsform der Erfindung umfasst eine erfindungsgemäße Vorrichtung mindestens eine weitere, hier nicht bildlich dargestellte Landmarke. Die weitere Landmarke ist einer weiteren, hier nicht bildlich dargestellten Zielposition zugeordnet und nahe dieser angebracht.

Gemäß einer ersten hieraus ableitbaren Ausführungsform sind beide in der erfindungsgemäßen Vorrichtung enthaltenen Landmarken annähernd identisch ausgeführt und durch die erfindungsgemäße Vorrichtung sind für beide Zielpositionen vergleichbare Parkvorgänge plan- und ausführbar.

Gemäß einer zweiten hieraus ableitbaren Ausführungsform sind die beiden Landmarken, welche nahe unterschiedlicher Zielpositionen angebracht sind, unterschiedlich beschaffen (z. B. bezüglich ihrer Formgestalt) und ihre Abbildungen im Kamerabild sind durch die Auswertungseinheit 8 unterscheidbar. Die erfindungsgemäße Vorrichtung ist somit in der Lage, die unterschiedlichen Zielpositionen zu unterscheiden und beispielsweise unterschiedliche räumliche Verhältnisse im Umfeld der Zielpositionen bei der Planung und Ausführung eines automatischen Parkvorgangs zu berücksichtigen. Hierzu ist im Kraftfahrzeug 1, insbesondere in der Steuereinheit 10, für jede Zielposition ein Satz von Parametern abgelegt, welche die räumlichen Verhältnisse rund um die jeweilige Zielposition und die Position und Lage der jeweiligen Landmarke bezüglich der jeweiligen Zielposition charakterisieren.

Die obigen Ausführungen beziehen sich überwiegend auf automatisch fahrerlos ausführbare Einparkvorgänge. Eine erfindungsgemäße Vorrichtung ist in vergleichbarer Art und Weise zur Planung, Ausführung und Überwachung eines Ausparkvorgangs anwendbar, insbesondere wenn dieser auf einen von der erfindungsgemäßen Vorrichtung ausgeführten Einparkvorgang folgt.

Die Erfindung lässt sich neben der fahrerlosen Durchführung von Parkvorgängen bei Kraftfahrzeugen in analoger Weise auf zu Parkvorgängen ähnliche Vorgänge anderer Fortbewegungsmittel übertragen. Beispielsweise kann durch eine erfindungsgemäße Vorrichtung das automatische Andocken eines Schiffes in definierter Position und Lage bezüglich einer Hafenmauer realisiert werden. Ebenso kann durch eine erfindungsgemäße Vorrichtung das automatische Andocken eines Flugzeuges in definierter Position und Lage bezüglich eines Flughafen-Terminals realisiert werden. Der erste Teil einer in einer erfindungsgemäßen Vorrichtung enthaltenen Sensorvorrichtung ist in einem solchen. Fall am Schiff bzw. am Flugzeug anzubringen, ein zweiter Teil an der Hafenmauer bzw. an dem Flughafen-Terminal.

## Patentansprüche

1. Vorrichtung zum automatischen Verbringen eines Kraftfahrzeuges (1) in eine Zielposition (3), aufweisend eine Sensorvorrichtung (5,6) und eine Auswertungseinheit (8) zur Bestimmung der Position des Kraftfahrzeugs relativ zur Zielposition sowie Mittel (10) zur Planung einer kollisionsfreien Fahrt von der aktuellen Position zur Zielposition und Mittel zur Ausführung der geplanten Fahrt,
wobei
- ein erster Teil (5) der Sensorvorrichtung am oder im Kraftfahrzeug angeordnet ist und ein zweiter Teil (6) der Sensorvorrichtung ortsfest in einer definierten Position nahe der Zielposition angeordnet ist und
- der zweite Teil der Sensorvorrichtung zumindest eine passive optische künstliche Landmarke umfasst, die derart beschaffen ist, dass sie zur richtungsabhängigen Reflexion einfallenden Lichts geeignet ist und
- die passive optische künstliche Landmarke derart beschaffen und/oder derart räumlich angeordnet ist, dass sie zur horizontal variablen Reflexion einfallenden Lichts geeignet ist.

2. Vorrichtung nach Anspruch 1, **dadurch gekennzeichnet,**
**dass** der erste Teil der Sensorvorrichtung in einer definierten räumlichen Lage bezüglich des Kraftfahrzeugs angeordnet ist und
**dass** die Sensorvorrichtung und die Auswertungseinheit geeignet sind, den horizontalen Winkel (α) zwischen einer Bezugsachse des ersten Teils der Sensorvorrichtung, insbesondere der Fahrzeuglängsachse, und einer Verbindungsachse zwischen einem Bezugspunkt des ersten Teils und einem Bezugspunkt des zweiten Teils der Sensorvorrichtung zu bestimmen.

3. Vorrichtung nach einem der Ansprüche 1 oder 2, **dadurch gekennzeichnet, dass** der zweite Teil der Sensorvorrichtung in einer definierten räumlichen Lage bezüglich der Zielposition angeordnet ist und
dass die Sensorvorrichtung und die Auswertungseinheit geeignet sind, den horizontalen Winkel (β) zwischen einer Bezugsachse des zweiten Teils der Sensorvorrichtung, insbesondere einer Garagenmittelachse, und einer Verbindungsachse zwischen einem Bezugspunkt des ersten Teils der Sensorvorrichtung und einem Bezugspunkt des zweiten Teils zu bestimmen.

4. Vorrichtung nach einem der Ansprüche 1 bis 3, **dadurch gekennzeichnet, dass** die Sensorvorrichtung und die Auswertungseinheit geeignet sind, den Abstand (D) zwischen einem Bezugspunkt des ersten Teils der Sensorvorrichtung und einem Bezugspunkt des zweiten Teils der Sensorvorrichtung zu bestimmen.

5. Vorrichtung nach einem der Ansprüche 1 bis 4, **dadurch gekennzeichnet, dass** der zweite Teil der Sensorvorrichtung ausschließlich aus der künstlichen Landmarke besteht.

6. Vorrichtung nach Anspruch 1, **dadurch gekennzeichnet,**
**dass** die passive optische künstliche Landmarke ein lentikulares Bild aufweist
und/oder
**dass** die passive optische künstliche Landmarke auf Lamellenbasis, ggf. mit Lamellen von variablem Anstellwinkel, ausgeführt ist.

7. Vorrichtung nach einem der Ansprüche 1 bis 6, **dadurch gekennzeichnet, dass** der erste Teil der Sensorvorrichtung eine Kamera umfasst, insbesondere eine Kamera, welche durch zumindest eine weitere Funktionalität des Kraftfahrzeugs nutzbar ist.

8. Vorrichtung nach einem der Ansprüche 1 bis 6, **dadurch gekennzeichnet, dass** die Sensorvorrichtung eine eigene Lichtquelle umfasst und/oder
dass die Sensorvorrichtung geeignet ist, zumindest einen Fahrzeugscheinwerfer (7) zu aktivieren.

## Claims

1. A device for automatically bringing a motor vehicle (1) into a target position (3), having a sensor device (5, 6) and an evaluation unit (8) for determining the position of the motor vehicle relative to the target position, as well as means (10) for planning a collision-free drive from the current position to the target position and means for carrying out the planned drive,
wherein
- a first part (5) of the sensor device is arranged on or in the motor vehicle and a second part (6) of the sensor device is arranged in a stationary manner in a defined position close to the target position, and
- the second part of the sensor device comprises at least one passive visual artificial landmark which is constituted such that it is suitable for the direction-dependent reflection of incident light, and
- the passive visual artificial landmark is constituted and/or is arranged spatially such that it is suitable for the horizontally variable reflection of incident light.

2. A device according to claim 1, **characterised in that** the first part of the sensor device is arranged in a defined spatial position with respect to the motor vehicle, and **in that** the sensor device and the evaluation unit are suitable for determining the horizontal angle (α) between a reference axis of the first part of the sensor device, more especially the longitudinal axis of the vehicle, and a connecting axis between a reference point of the first part and a reference point of the second part of the sensor device.

3. A device according to either claim 1 or claim 2, **characterised in that** the second part of the sensor device is arranged in a defined spatial position relative to the target position, and **in that** the sensor device and the evaluation unit are suitable for determining the horizontal angle (β) between a reference axis of the second part of the sensor device, more especially a centre axis of a garage, and a connecting axis between a reference point of the first part of the sensor device and a reference point of the second part.

4. A device according to any of claims 1 to 3, **characterised in that** the sensor device and the evaluation unit are suitable for determining the distance (D) between a reference point of the first part of the sensor device and a reference point of the second part of the sensor device.

5. A device according to any of claims 1 to 4, **characterised in that** the second part of the sensor device consists exclusively of the artificial landmark.

6. A device according to claim 1, **characterised in that** the passive visual artificial landmark has a lenticular image, and/or **in that** the passive visual artificial landmark is configured on a lamellar basis, optionally with lamellae of a variable setting angle.

7. A device according to any of claims 1 to 6, **characterised in that** the first part of the sensor device comprises a camera, more especially a camera which can be used by at least one further functionality of the motor vehicle.

8. A device according to any of claims 1 to 6, **characterised in that** the sensor device comprises its own light source and/or **in that** the sensor device is suitable for activating at least one vehicle headlight (7).

## Revendications

1. Procédé permettant de transférer automatiquement un véhicule (1) dans une position-cible (3) comprenant un dispositif capteur (5, 6) et une unité d'exploitation (8) permettant de déterminer la position du véhicule par rapport à la position cible ainsi que des moyens (10) permettant de planifier un déplacement exempt de collisions entre la position actuelle et la position cible et des moyens permettant d'effectuer le déplacement planifié,
selon lequel
une première partie (5) du dispositif capteur est montée sur ou dans le véhicule tandis qu'une seconde partie (6) du dispositif de capteur est montée stationnaire dans une position définie proche de la position cible, et
la seconde partie du dispositif de capteur comprend au moins un point de repère artificiel optique passif qui conçu de façon à permettre de réfléchir la lumière incidente en fonction de sa direction, et
le point de repère artificiel optique passif est conçu et/ou positionné dans l'espace de façon à permettre de réfléchir horizontalement de façon variable la lumière incidente.

2. Procédé conforme à la revendication 1,
**caractérisé en ce que**
la première partie du dispositif capteur est située dans une position définie dans l'espace par rapport au véhicule, et
le dispositif capteur et l'unité d'exploitation sont adaptés pour déterminer l'angle horizontal (α) entre un axe de référence de la première partie du dispositif capteur, en particulier, l'axe longitudinal du véhicule et l'axe de liaison entre un point de référence de la première partie et un point de référence de la seconde partie du dispositif capteur.

3. Dispositif conforme à l'une des revendications 1 et 2,
**caractérisé en ce que**
la seconde partie du dispositif capteur est située dans une position définie dans l'espace par rapport à la position cible, et
le dispositif capteur et l'unité d'exploitation sont adaptés pour déterminer l'angle horizontal (β) entre un axe de référence de la seconde partie du dispositif capteur, en particulier, l'axe médian d'un garage et l'axe de liaison entre un point de référence de la première partie du dispositif capteur et un point de référence de la seconde partie.

4. Dispositif conforme à l'une des revendications 1 à 3,
**caractérisé en ce que**
le dispositif capteur et l'unité d'exploitation sont adaptés pour déterminer la distance (D) entre un point de référence de la première partie du dispositif capteur et un point de référence de la seconde partie du dispositif capteur.

5. Dispositif conforme à l'une des revendications 1 à 4,
**caractérisé en ce que**
la seconde partie du dispositif capteur est exclusivement constituée par le point de repère artificiel.

6. Dispositif conforme à la revendication 1,
**caractérisé en ce que**
le point de repère artificiel optique passif comporte une image en forme de lentille, et/ou
le repère artificiel optique passif est réalisé à partir de lamelles, le cas échéant, avec des lamelles ayant un angle de réglage variable.

7. Dispositif conforme à l'une des revendications 1 à 6,
**caractérisé en ce que**
la première partie du dispositif capteur comprend une caméra, en particulier une caméra qui peut être utilisée pour au moins une autre fonction du véhicule.

8. Dispositif conforme à l'une des revendications 1 à 6,
**caractérisé en ce que**
le dispositif capteur comprend une source de lumière qui lui est propre, et/ou
le dispositif capteur est adapté pour activer au moins un projecteur (7) du véhicule.
